# EUROPEAN PATENT APPLICATION

(11) **EP 1 259 025 A2**
(43) Date of publication of application: **20.11.2002**
(21) Application number: 02009893.5
(22) Date of filing: 02.05.2002
(51) Int. Cl.: H04L 12/00

(54) **Data storing and reproducing system**

(30) Priority: 18.05.2001 JP 2001149725
(71) Applicant: Pioneer Corporation, Tokyo-to (JP)
(72) Inventor: Izumi, Kiyoshi, c/oPioneer Corp., Kawagoe Works., Kawagoe-shi, Saitama-ken (JP); Yamanaka, Tadamase, Pioneer Corp., Kawagoe Works, Kawagoe-shi, Saitama-ken (JP); Takahashi, Keiichi, Pioneer Corp., Kawagoe Works, Kawagoe-shi, Saitama-ken (JP); Iwase, Takeshi, c/oPioneer Corp., Kawagoe Works, Kawagoe-shi, Saitama-ken (JP)
(74) Representative: Grünecker, Kinkeldey, Stockmair & Schwanhäusser Anwaltssozietät

(57) **Abstract**

An in-vehicle device 2 mounted on a vehicle 1 receives music data distributed from a satellite 3 via a satellite receiver antenna 22a, and exchanges the music data with a center server 5 via a base station and a cellular telephone antenna 23a. The center server 5 sets up a music database 11, which includes user storages 13, one being provided for a user while allocating a predetermined storage capacity. The center server 5 receives the music data having classification information appended thereto from the in-vehicle device 2, stores them in the user storage 13, and, in response to a user's reproduction request, reads the requested music data stored in the user storage 13 based on the appended classification information and sends the read music data to the in-vehicle device 2. In addition, a billing processor 12 performs a billing process for the user on an individual basis using billing information stored in a billing database 14.

## Description

### BACKGROUND OF THE INVENTION

### Field of the Invention

The present invention generally relates to data storing/reproducing systems, and more particularly to a data storing/reproducing system comprising a user terminal for handling user data and a data storing device capable of transmitting/receiving data to/from the user terminal.

### Description of Related Art

Devices are traditionally known, which receive digitized music data via broadcast stations and/or the Internet, store the music data in a memory, read the music data from the memory, and reproduce the music data. For example, by using a nonvolatile flash memory as the memory capable of recording music data, for recording the received music data on demand, a highly operable and downsizable device can be implemented.

In such a device, the size of its memory limits that of recordable music data, and may not satisfy some users desiring to record as vast an amount of music data as possible. To satisfy their desire, the cost and size of the device is likely to increase. Thus, there is a need to provide a device that can record and reproduce a vast amount of music data at no sacrifice of its cost and size.

### SUMMARY OF THE INVENTION

The invention has been made to satisfy the above need. It is, therefore, an object of the invention to provide a data storing/reproducing system including an inexpensive and small-sized user terminal, which, through transmission/receipt of data between the user terminal and a data storing device, stores data sequentially to a user storage associated with a user so that the user can utilize any desired data without having a large-capacity storage means in the user terminal.

According to the invention, user storages are set up in the data storing device, each of the user storages being provided for a respective user of a user terminal as a storage area dedicated to the user for the user terminal. During the data storing process, the user terminal transmits data to be stored to the data storing device. During the data reproducing process, the user terminal requests the data storing device to transmit data to be reproduced, and the data storing device reads the requested data from the user storage and transmits the read data to the user terminal, so that the user terminal reproduces the transmitted data. This arrangement permits storing of data, which the user wishes to store in the user storage set up at the data storing device even when the memory size of the user terminal is limited. Thus, an inexpensive and small-sized user terminal can be implemented.

According to the invention, an identification information is given to each of the user storages set up in the data storing device. This arrangement permits reliable identification of a specific user storage set up for a user through reference to the identification information during the data storing or reproducing process.

According to the invention, each of the user storages of the data storing device stores user data with classification data appended thereto, and the user can specify the classification data during reading of the user data. This arrangement permits a user to utilize the user storage as a data library based on the classification data.

According to this invention, each of the user storages of the data storing device stores music data with classification data appended thereto. This arrangement permits the user to manage the music data according to a genre or the like. Thus, the user can utilize the user storage as a data library based on the classification data.

According to this invention, each of the user storages of the data storing device stores music data with attribute information appended thereto, and the user can specify the name of an artist and music title as the attribute information. This arrangement permits the user to select desired music data easily from the user storage.

According to the invention, the data storing device performs the billing process for a user when the user sets up a user storage. This arrangement permits construction of a data storing/reproducing system as a business method capable of providing the user with usefulness.

According to the invention, the billing process performed by the data storing device fixes a basic cost which is dependent on a storage capacity selected by a user when the user sets up a user storage, and adds to the fixed basic cost another type of cost which is commensurate with the duration of a data storing/reproducing performed by the user. This arrangement permits the user to be billed reasonably and appropriately.

According to this invention, the user terminal, which is inexpensive and small in size resulting from the above advantages, is mounted on a mobile body, and is wirelessly connectable to the data storing device. This arrangement permits the invention to be applied extensively to, for example, in-vehicle devices and portable devices, and thus provides the user with more usefulness.

### BRIEF DESCRIPTION OF THE DRAWINGS

FIG. 1 is a view illustrating a configuration of an entire music data storing/reproducing system to which the invention is applied;
FIG. 2 is a block diagram illustrating the configuration of major components of an in-vehicle device;
FIG. 3 is a view illustrating the data structure of a music database;
FIG. 4 is a flowchart showing a user storage registration process performed by the in-vehicle device;
FIG. 5 is a flowchart showing a user storage registration process performed by a center server;
FIGS. 6(a) to 6(f) show menus appearing on a display through a user operation during the user storage registration process utilizing the in-vehicle device as shown in FIG. 4;
FIG. 7 is a view illustrating the data structure of a billing database;
FIG. 8 is a flowchart showing a music data storing process performed by the in-vehicle device;
FIG. 9 is a flowchart showing a music data storing process performed by the center server;
FIGS. 10(a) to 10(f) show menus appearing on the display through a user operation during the music data storing process utilizing the in-vehicle device as shown in FIG. 8;
FIG. 11 is a flowchart showing a music data reproducing process performed by the in-vehicle device;
FIG. 12 is a flowchart showing a music data reproducing process performed by the center server; and
FIGS. 13(a) to 13(d) show menus appearing on the display through a user operation during the music data reproducing process utilizing the in-vehicle device as shown in FIG. 11.

### DETAILED DESCRIPTION OF THE PREFERRED EMBODIMENTS

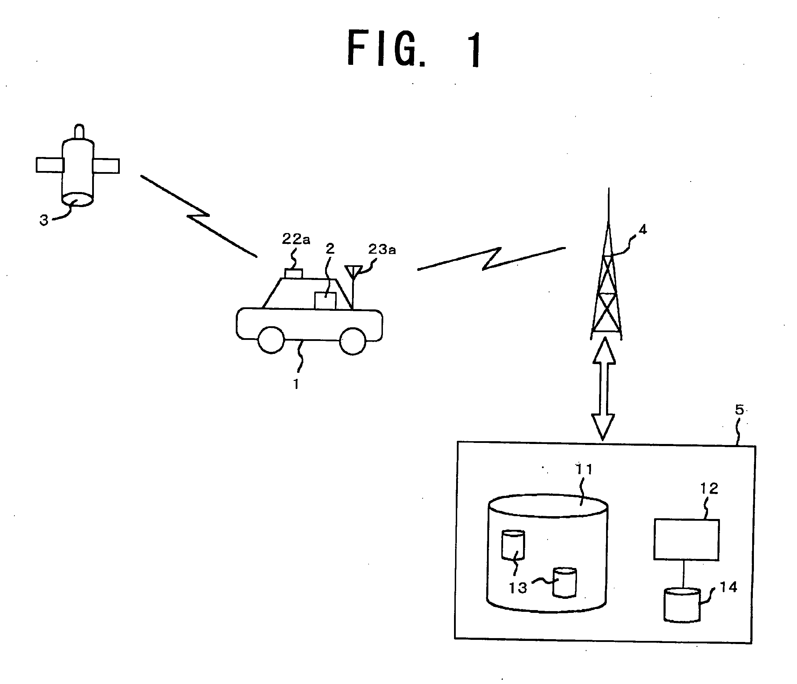

FIG. 1 is a view illustrating a configuration of an entire music data storing/reproducing system to which the invention is applied. In FIG. 1, there are shown an in-vehicle device 2 mounted on a vehicle 1 of a user, a satellite 3 that wirelessly distributes music data, a base station 4 for wireless connection with a number of cellular telephones, and a center server 5 connected to the base station 4.

The in-vehicle device 2, provided with a function of receiving music data distributed by the satellite 3 and a function of communicating as a cellular telephone, serves as a user terminal of the invention. The in-vehicle device 2, connected to both a satellite receiver antenna 22a and a cellular telephone antenna 23a mounted on the vehicle 1, receives, via the satellite receiver antenna 22a, radio waves transmitted from the satellite 3 including music data digitized in a predetermined format.

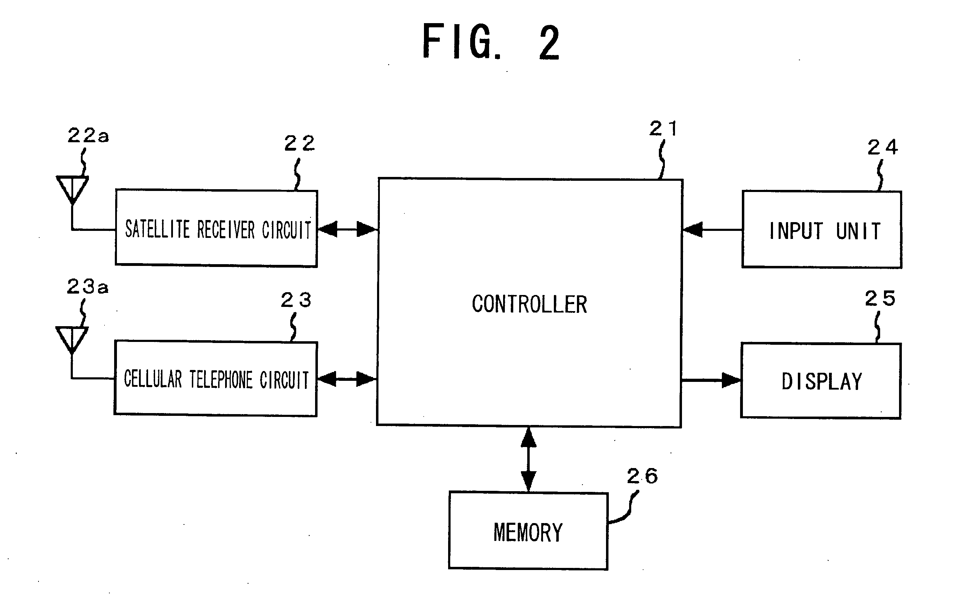

Referring next to FIG. 2, the in-vehicle device 2 according to this embodiment comprises a controller 21, a satellite receiver circuit 22, a cellular telephone circuit 23, an input unit 24, a display 25, and a memory 26.

In the configuration of the in-vehicle device 2 shown in FIG. 2, the controller 21 controls the overall operations of the in-vehicle device 2, including the satellite broadcast receiving function and the cellular telephone function based on control software, as well as operations of storing and reproducing music data through wireless communication with the center server 5 based on a user operation, as will be described below.

The satellite receiver circuit 22 includes circuits required to receive signals from the satellite 3 via the satellite receiver antenna 22a. The cellular telephone circuit 23 includes circuits required to transmit and receive signals via the cellular telephone antenna 23a to operate the in-vehicle device 2 as a cellular telephone. The input unit 24 includes multiple key sections for a user to interact with the in-vehicle device 2. The display 25 is a means for reproducing various menus on its liquid-crystal panel or the like. The memory 26 is a means for temporarily storing music data distributed by the satellite 3, and is comprised of a flash memory, for example.

The base station 4 shown in FIG. 1 radio-communicates with the in-vehicle device 2 via the cellular telephone antenna 23a to exchange various information including music data. A plurality of base stations 4 are arranged, one being provided for each radio communication area covering a predetermined range. The in-vehicle device 2 establishes a wireless connection with an adjacent one of the base stations 4 according to the location of the vehicle 1. Additionally, the center server 5 is connected to the adjacent base station 4 via, for example, gateways and wired networks to form a data transmission path between the in-vehicle device 2 and the center server 5.

The center server 5 exchanges music data, etc. with the in-vehicle device 2 via the base station 4, and thus functions as a data storing device of the invention. The center server 5 incorporates a music database 11 that includes multiple user storages for storing music data. The center server 5 also incorporates a billing processor 12 for performing a billing process and a billing database 14 for recording billing information.

Each of the user storages 13 included in the music database 11 is a storage area having a predetermined storage capacity allocated to an associated one of registered users. Each user storage 13 can store music data information one after another as the user, after receiving and preparing such data information at the in-vehicle device 2, sends them to the center server 5. Also, in response to a user's reproduction request, desired music data stored in the associated user storage 13 can be reproduced on demand through transmission from the center server 5 to the in-vehicle device 2. The center server 5 also retains registration information about a user who owns his or her user storage 13. In this way, the center server 5 is responsible for storing music data distributed to the in-vehicle device 2, and reading the stored music data.

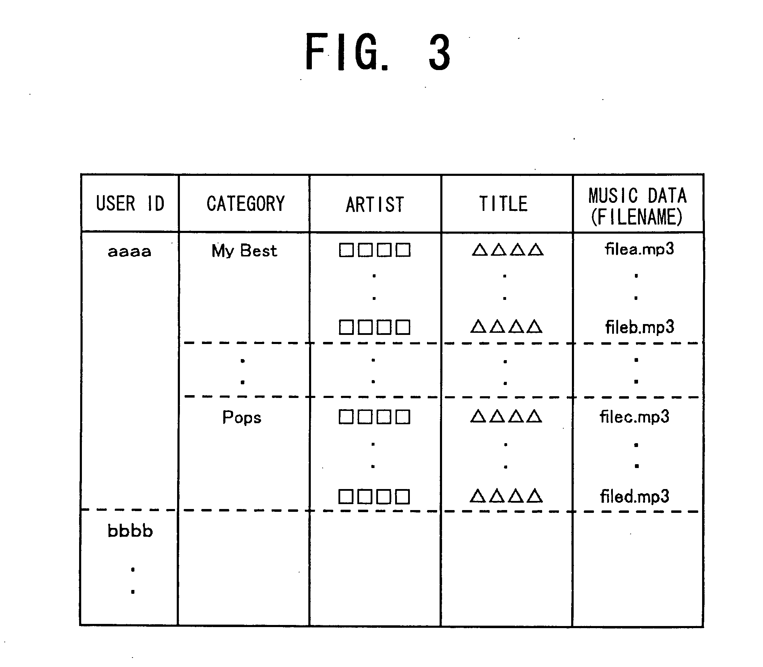

Referring here to FIG. 3, the music database 11 is segmented into user storages 13 associated with respective registered users. In each user storage 13, the user ID of a registered user, and music data and its attribute information are recorded. The user ID is an inherent identification information to a registered user, by which his or her storage 13 can be specified. The attribute information includes a category or classification information, an artist name, and a title, about music data. The music data are recorded as files, all in a format ".mp3" in the specific example of FIG. 3. As will be described below, music data contained in a personal user storage 13 can be sorted based on a predetermined attribute information.

It should be noted here that specific processes of storing and reproducing music data using the user storage 13 as well as a billing process based on the billing processor 12 and the billing database 14 will be described below after a registration process.

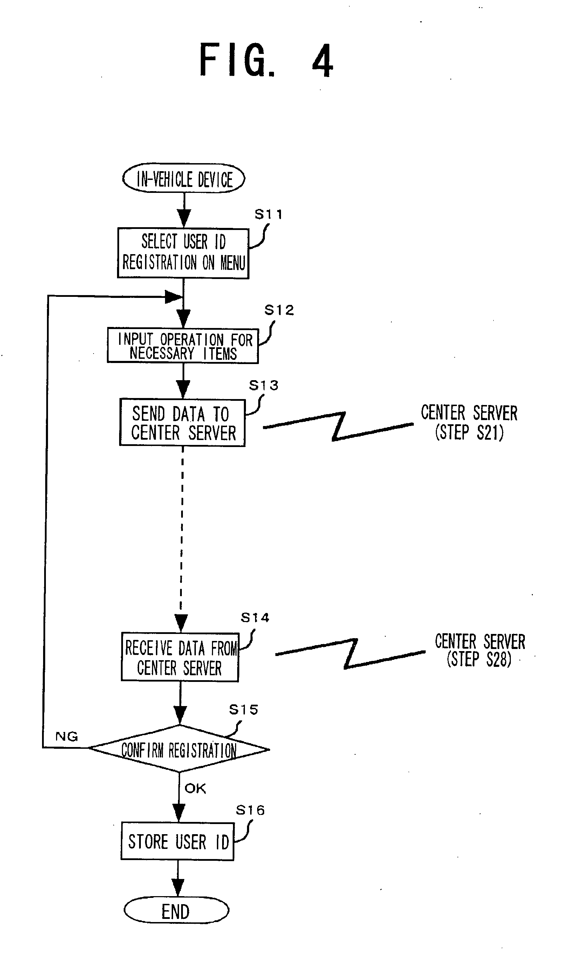

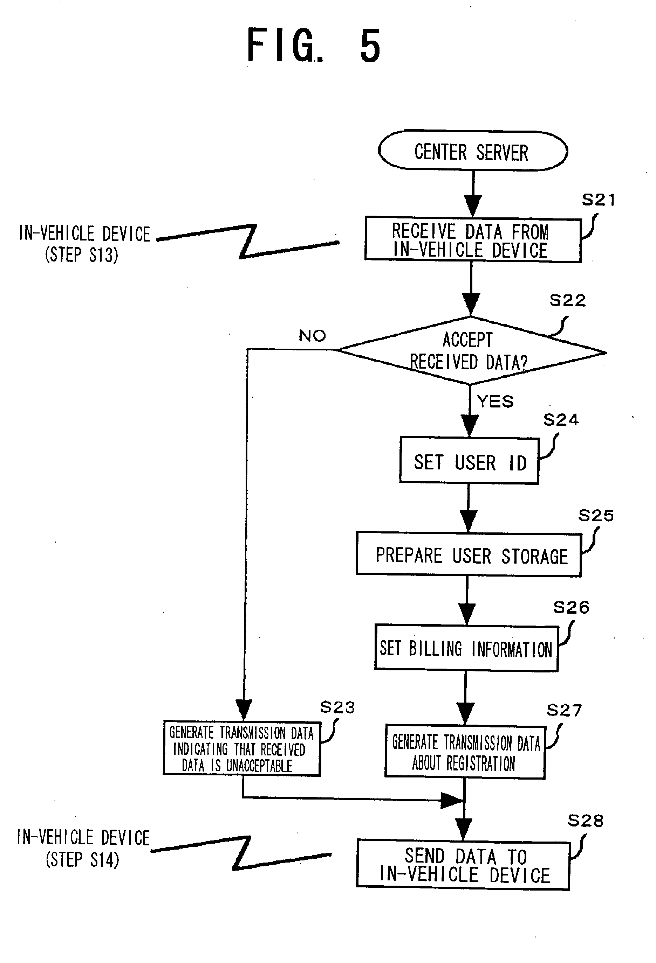

Referring now to FIGS. 4 to 7, the registration process will be described. This process allows a user of the in-vehicle device 2 to set up his or her user storage 13 in the center server 5. Process steps in FIGS. 4 and 5 are arranged so that one can understand how the in-vehicle device 2 and the center server 5 exchange data chronologically to perform the registration process.

Once the registration process of FIG. 4 has started at the in-vehicle device 2 with a menu displayed on the display 25, a user selects the user ID registration via the input unit 24 (step S11). Then, the user, viewing the display 25, enters information required for the user ID registration via the input unit 24 (step S12).

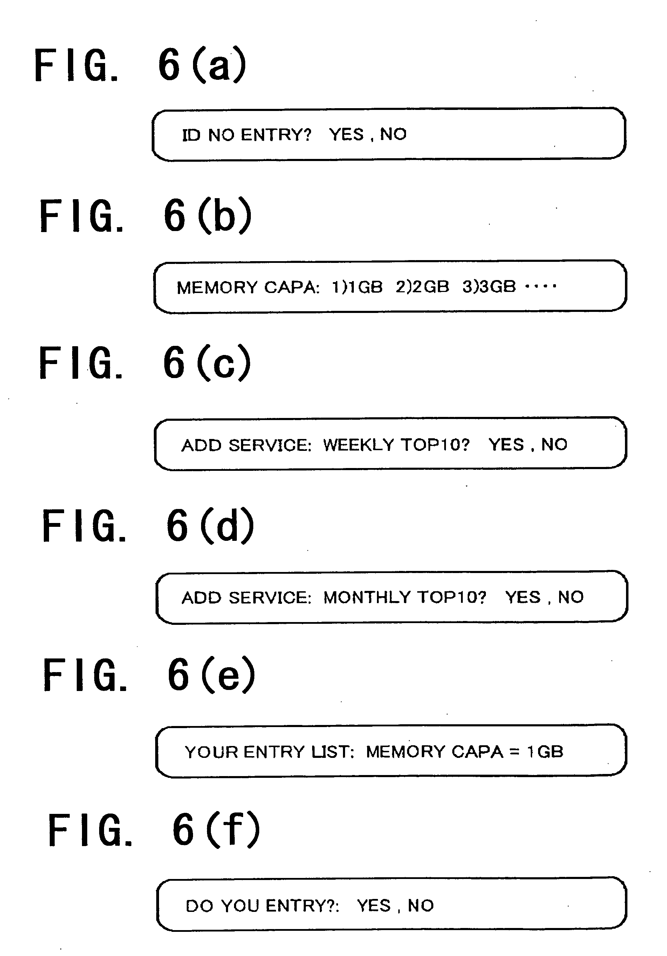

In step 11, a menu such as shown in FIG. 6(a) appears on the display 25, prompting the user to determine whether or not the user registers a user ID. When the user selects "YES" via the input unit 24, menus such as shown in FIGS. 6(b) to 6(d) are displayed one after another in accordance with step S12. Specifically, in FIG. 6(b), the user selects a desired storage capacity for setting up his or her storage 13. Then, the user is asked to select additional services, which will be automatically added to his or her user storage 13. The services include, for example, "Weekly Top 10" such as shown in FIG. 6(c), and "Monthly Top 10" such as shown in FIG. 6(d). Many other alternative services may be provided.

Next, the in-vehicle device 2 sends transmission data corresponding to the information entered in step S12 to the center server 5 (step S13) through activation of the cellular telephone circuit 23 to establish a wireless connection with the base station 4, i.e., through its cellular telephone function. The center server 5, in turn, receives this transmission data via the base station 4 (step S21).

Then, the center server 5 determines whether or not the received transmission data is acceptable (step S22). Specifically, the center server 5 checks the received data to confirm that the required information has been properly entered in step S12. If it is determined unacceptable ("NO" in step S22), then the center server 5 generates transmission data for informing the user to that effect (step S23).

Otherwise ("YES" in step S22), the center server 5 sets a user ID for the registering user (step S24). The accepted information is added to the music database 11 as the registered information about that user. The user ID set in step S24 is inherent in each user for his or her identification, as mentioned previously.

Successively, an area is reserved in the center server storage 13 to define a personal user storage 13 for that user (step S25). The center server 5 allocates the storage capacity selected by the user in step S12 to his or her user storage 13. In addition, the billing processor 12 sets billing information associated with the use of the user storage 13 (step S26). Then, the center server 5 generates transmission data in order to inform the registered user of his or her user ID and other registration information including a basic cost (step S27).

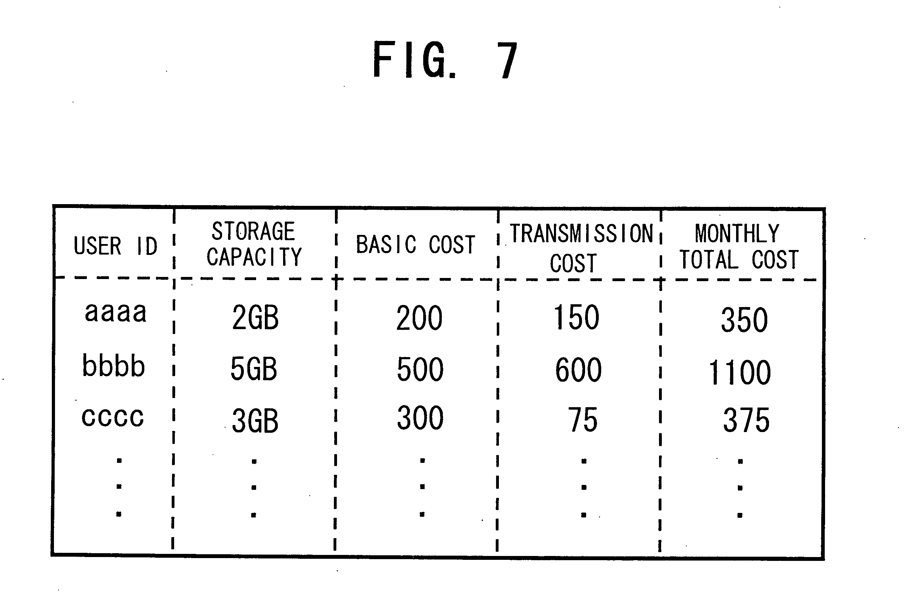

Referring then to FIG. 7, the billing database 14 stores and maintains information necessary for the billing process, together with the user ID of the newly registered user. In the example of FIG. 7, the billing database 14 contains the storage capacity allocated to the user storage 13 in step S25, the basic cost incurred for the use of that storage capacity, a transmission cost incurred every time for music data is transmitted as will be described below, and a monthly total cost. The basic cost is fixed, while the transmission cost is variable.

In FIG. 7, the larger the capacity reserved for the user storage 13, the higher the basic cost becomes. The transmission cost is calculated based on the duration of a music data transmission between the center server 5 and the in-vehicle device 2 when the user stores and/or reproduces desired music data, a detailed calculation method of which will be described below. The monthly total cost is a sum of the basic cost and the transmission cost. The transmission cost and the monthly total cost are managed as history data or reset on a monthly basis in the billing database 14.

Next, the center server 5 sends the transmission data generated in step S23 or S27 to the in-vehicle device 2 (step S28). The in-vehicle device 2, in turn, receives this transmission data through radio communication via the base station 4 (step S14).

Then, the in-vehicle device 2 displays check menus on the display 25 so that the user can check what has been registered with the center server 5 (step S15). As shown in FIG. 6(e), for example, the first menu is about the capacity of the user storage 13 entered by the user in step S12. Then, by scrolling the display screen with the input unit 24, the user can view other menus one after another to check the registration. Lastly, the user is asked if he or she is agreeable with the registration as shown in FIG. 6(f), for example. If the user is not agreeable ("NG" in step S15), then the in-vehicle device 2 returns to step S12 to ask the user to re-enter information from the current step forward.

If, on the other hand, the user is agreeable with the registration ("OK" in step S15), then the in-vehicle device 2 stores, in the memory 26, the user ID present in the transmission data received in step S14 (step S16), after which the registration process of FIG. 4 is terminated. The user ID stored in the memory 26 in step S16 is referenced during the following process of storing or reproducing music data.

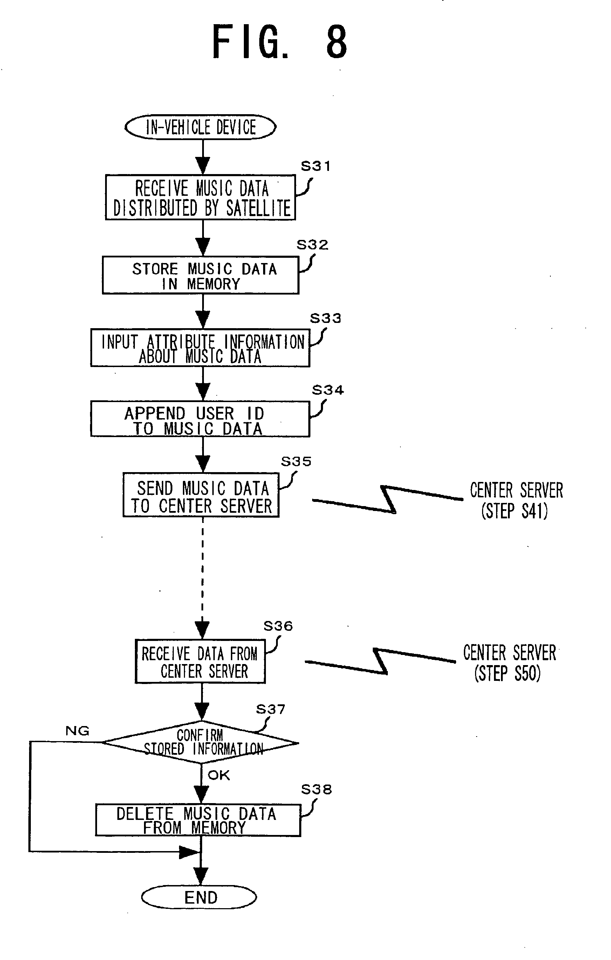

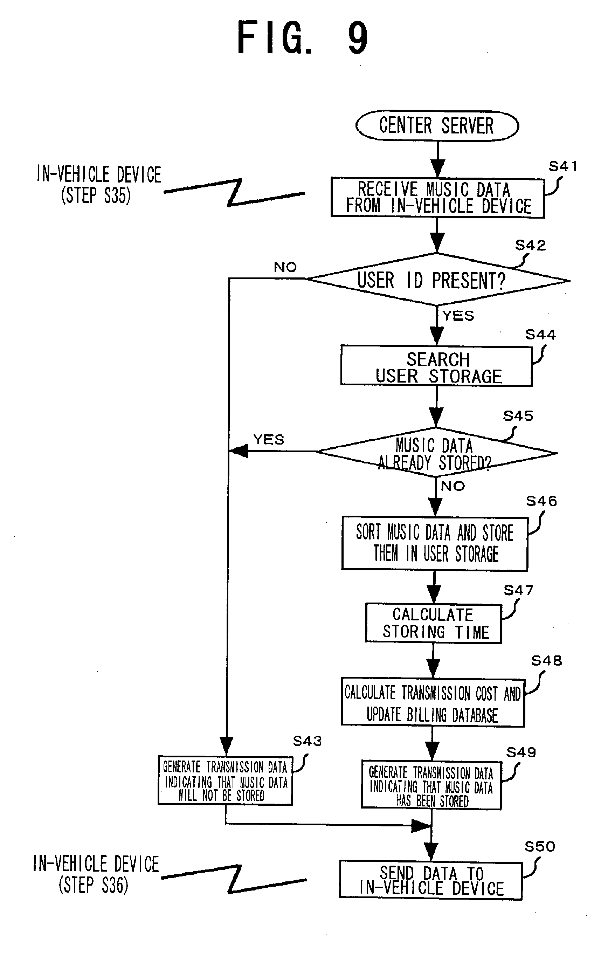

Referring next to FIGS. 8 to 10(f), the process of storing music data utilizing the user storage 13 set up by the above registration process will be described. Process steps in FIGS. 8 and 9 are similarly arranged so that one can understand how the in-vehicle device 2 and the center server 5 exchange data chronologically to perform the music data storing process.

As shown in FIG. 8, the storing process starts with the in-vehicle device 2 receiving music data distributed by the satellite 3 (step S31). The received music data is temporarily stored in a predetermined area of the memory 26 (step S32). Then, the user enters attribute information about music data to be stored (step S33). The entered attribute information will be appended to the music data as text data when the music data is to be sent to the center server 5.

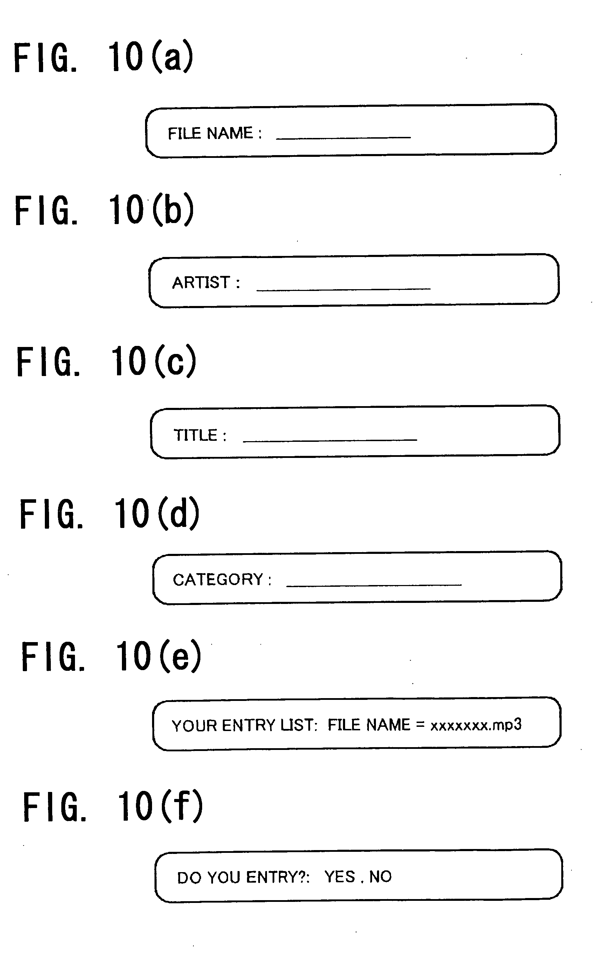

In step S33, menus such as shown in FIGS. 10(a) to 10(d) are displayed to prompt the user to enter various attribute information about the music data. Specifically, the attribute information to be entered includes, for example, the name of a music data file shown in FIG. 10(a), the name of an artist shown in FIG. 10(b), the title of the music data shown in FIG. 10(c), and the category to which the music data belongs shown in FIG. 10(d). If music data already incorporating its attribute information such as the artist name, title, and category is distributed unlike the above example in which the user enters the attribute information, then the process may extract such incorporated attribute information from the music data and may automatically enter the extracted information in step S33.

Then, the user ID is appended to the music data to be stored (step S34) by reading from the memory 26 the user ID, which has been stored in step S16 during the process of FIG. 4. The in-vehicle device 2 sends the user ID- and attribute information-appended music data to the center server 5 (step S35) via the base station 4 through its cellular telephone function. The center server 5, in turn, receives this music data via the base station 4 (step S41).

Then, the center server 5, which have received the music data in step S41, determines whether or not the user ID is present in the received music data (step S42). Specifically, the center server 5 extracts the user ID through analysis of the received music data, and then checks the user ID by reference to the registration information in the music database 11. If the user ID is not present ("NO" in step S42), the center server 5 generates transmission data for informing the user that the music data will not be stored (step S43).

Otherwise ("YES" in step S42), the center server 5 searches data stored in the user storage 13 associated with this user ID (step S44), and determines whether or not the same music data as the received music data is stored in that user storage 13 (step S45). For example, whether they match or not can be determined by comparing the sum of all bytes of the received music data with the checksum of the file corresponding to the received music data.

If the received music data has already been stored in the user storage 13 ("YES" in step S45), resulting from determination in step S45, then the center server 5 moves to step S43. This prevents the same music data from being stored again in the user storage 13, thus permitting an effective use of the limited capacity of the user storage 13. If the received music data has not been stored ("NO" in step S45), the center server 5 performs sorting based on the appended text data to store the received music data in a predetermined position (step S46).

During the storing process, the center server 5 calculates the time required therefor (step S47). A time measuring device needs to be used to count the time between the storing start and end in step S46. Then, the center server 5 calculates the transmission cost shown in FIG. 7 based on the storing time calculated in step S47, and updates the billing database 14 based on the calculated transmission cost (step S48). In this way, the storing of the music data in step S46 can be reflected in the billing information associated with the user.

Then, the center server 5 generates transmission data for informing the user that the music data has been stored (step S49). This transmission data contains the billing information obtained in step S48. Now, the center server 5 sends the transmission data generated in step S43 or S49 to the in-vehicle device 2 (step S50). In turn, the in-vehicle device 2 receives this transmission data through radio communication via the base station 4 (step S36).

Then, the in-vehicle device 2 displays check menus on the display 25 so that the user can check as what has been stored by the center server 5 (step S37). For example, as shown in FIG. 10(e), the filename of the music data stored in the user storage 13 in step S46 is displayed. Then, by scrolling the display screen with the input unit 24, the user can view a list of the filenames of all the music data so far stored, and lastly, the user is asked to confirm what has been stored is agreeable as shown in FIG. 10(f), for example.

If the user is agreeable with what has been stored ("OK" in step S37), the in-vehicle device 2 deletes the music data stored in the memory 26 in step S32 (step S38), and then the storing process of FIG. 8 is terminated. In this way, the storage area of the memory 26 is freed so that the user can record some other data. If, on the other hand, the user is not agreeable ("NG" in step 37), the in-vehicle device 2 terminates the storing process of FIG. 8 without executing step S38. In this case, the music data must be retained in the memory 26 in order to prevent failure to store the desired music data in the user storage 13.

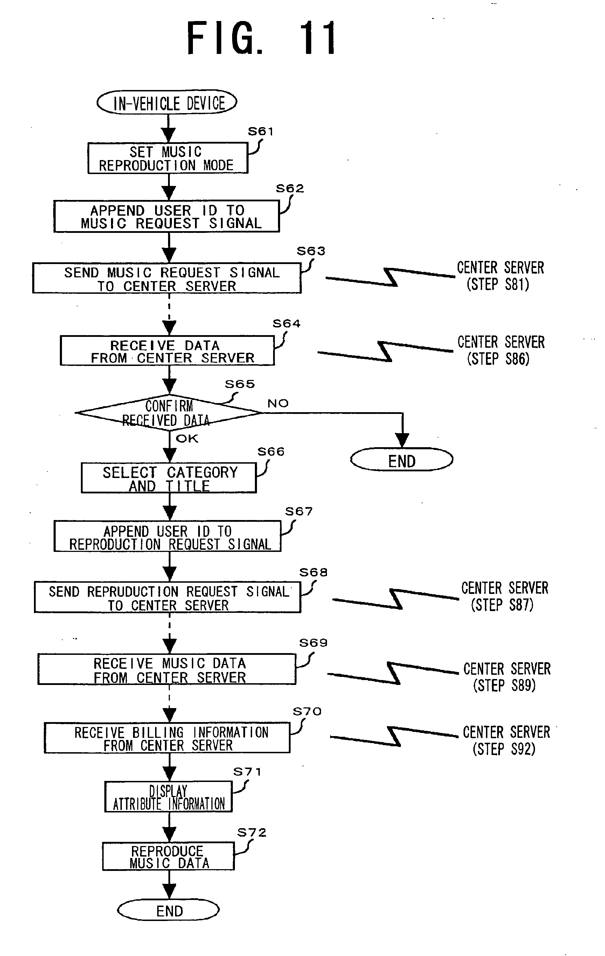

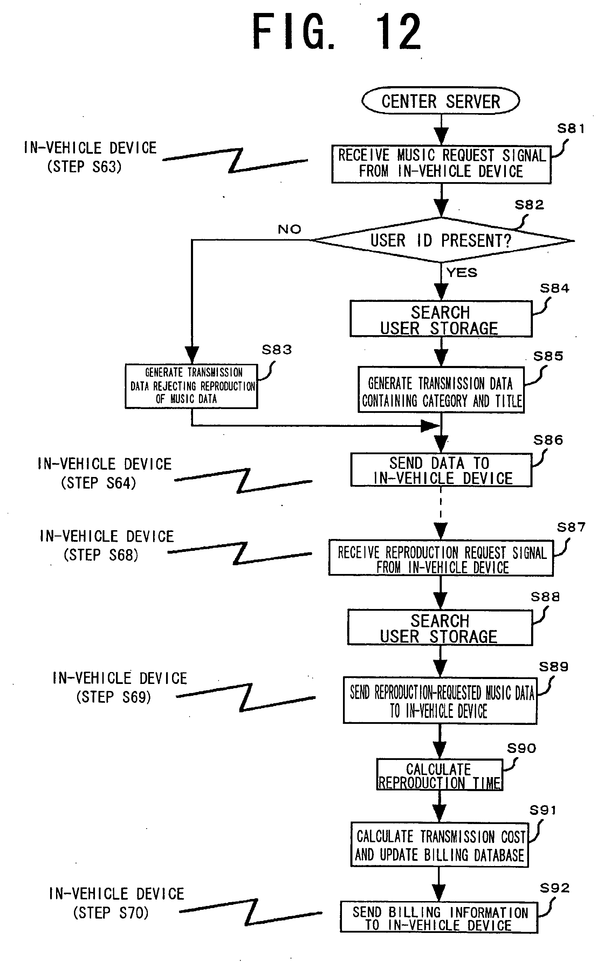

Referring next to FIGS. 11 to 13(d), the process of reproducing music data stored in the user storage 13 by the storing process will be described. Process steps in FIGS. 11 and 12 are similarly arranged so that one can understand how the in-vehicle device 2 and the center server 5 exchange data chronologically to perform the music data reproducing process.

As shown in FIG. 11, to reproduce desired music data stored in the user storage 13, the user needs to select a music reproduction mode (step S61). Then, the in-vehicle device 2 generates a music request signal and automatically appends the user ID to this signal (step S62). The music request signal is to be sent to the center server 5 in order to acquire the desired music data stored in the user storage 13 and to reproduce such music data.

The in-vehicle device 2 sends the user ID-appended music request signal to the center server 5 (step S63) via the base station 4 through its cellular telephone function. The center server 5, in turn, receives this music request signal via the base station 4 (step S81).

Then, the center server 5 determines whether or not the received music request signal contains the user ID (step S82). This step is performed similarly to step S42 of FIG. 9. If the user ID is not present ("NO" in step S82), the center server 5 generates transmission data for informing the user that the desired music data will not be reproduced (step S83).

Otherwise ("YES" in step S82), the center server 5 searches data stored in the user storage associated with this user ID (step S84). Based on the search result, the center server 5 then acquires the attribute information about the music data corresponding to the received music request signal from the user storage 13, and generates transmission data containing text data indicating the category and title about the music data which is extracted from the attribute information (step S85).

Next, the center server 5 sends the transmission data generated in step S83 or S85 to the in-vehicle device 2 (step S86). The in-vehicle device 2, in turn, receives this transmission data through radio communication via the base station 4 (step S64).

Then, the in-vehicle device 2 displays a menu on the display 25 based on the received transmission data, to ask the user to check the received transmission data and select attribute information (step S65). If the received data do not match with the user's reproduction request (step S65), then the in-vehicle device 2 cancels the current music reproduction request, and terminates the process of FIG. 11. If the received data match with the user's reproduction request, then the in-vehicle device 2 causes the display 25 to display a menu which the user has selected on the menu, prompting the user to select categories or titles (step S66).

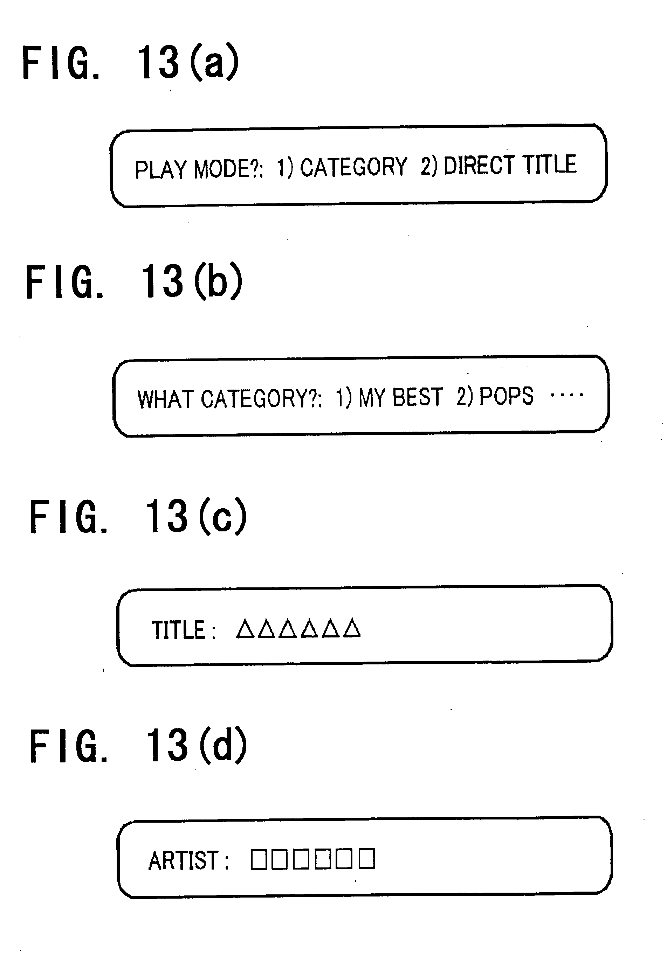

For example, as shown in FIG. 13(a), as of step S65, "CATEGORY" and "DIRECT TITLE" are displayed as the choices in the reproduction mode. Selection of these attribute information enables the user to select music to be reproduced according to his or her preference. Also, as shown in FIG. 13(b), a list of categories appears as a display screen corresponding to step S66, for example. When the user selects "DIRECT TITLE" in FIG. 13(a), the user enters the title of music data directly.

Next, the in-vehicle device 2 generates a reproduction request signal containing information selected in step S66 and automatically appends the user ID to the generated reproduction request signal (step S67). This reproduction request signal is to be sent to the center server 5 in order to instruct the center server 5 to reproduce the music data corresponding to the user's selection. Then, the in-vehicle device 2 sends the user ID- and attribute information-appended reproduction request signal to the center server 5 (step S68). The center server 5, in turn, receives this reproduction request signal via the base station 4 (step S87).

Then, the center server 5 searches the data stored in the user storage 13 associated with the user ID (step S88), and reads the corresponding music data from the user storage 13 based on the search result, and transmits the read music data to the in-vehicle device 2 together with its attribute information (step S89). When the category information is selected in step S66, music data are sent together with their attribute information.

At the same time, the center server 5 calculates the duration of the current music data reproducing (step S90). The time measuring device is caused to count the time between the transmission start and end in step S89. Then, the transmission cost shown in FIG. 7 is calculated based on the duration calculated in step S90, and the billing database 14 is updated based on the calculated transmission cost (step S91). In this way, the transmission of the music data in step S90 is reflected in the billing information associated with the user. Successively, the center server 5 sends the updated billing information to the in-vehicle device 2 (step S92).

In turn, the in-vehicle device 2 receives the music data from the center server 5 through radio communication via the base station 4 (step S69), as well as the billing information sent in step S92 (step S70). Then, the in-vehicle device 2 extracts the title and the name of the artist from the attribute information appended to the music data, and displays them on the display 25 (step S71). For example, as shown in FIG. 13(c), the title of the music data to be reproduced is displayed, and as shown in FIG. 13(d), the name of the artist is displayed according to the user operation. The in-vehicle device 2 reproduces the received music data while reproducing the above-mentioned attribute information (step S72). If the user has selected category information in step S66, music data contained in the same category information are reproduced in sequence. In this case, the information shown in FIG. 13(c) or 13D changes every time the music data changes.

Next, the billing process executed by the center server 5 will be additionally described. When the user stores and reproduces music data repeatedly, the bill to be paid by the user increases with increasing transmission cost. Thus, the center server 5 automatically calculates the monthly total cost whenever a fixed date is due according to an incorporated calendar, for management in the billing database 14, and sends the calculated monthly total cost as the billing information to the in-vehicle device 2. After having sent the billing information, the monthly total cost and the transmission cost are either stored as history data or reset.

It should be appreciated that the above-described preferred embodiment of the invention may be modified appropriately for various other applications. For example, data to be sent is not limited to music data, but may also include other data content, such as image data. Moreover, the user terminal, which is the in-vehicle device 2 in the preferred embodiment, may include various other typical portable devices, or data terminals connectable to wired networks.

As described in the foregoing, according to the invention, the data storing device sets up a user storage for a user, and exchanges data with a user terminal to store user data in the user storage. This arrangement permits implementation of the user terminal, which is inexpensive and downsized with no large-capacity storage means, as well as implementation of a data storing/reproducing system including a user terminal that is suitable for use during movement.

## Claims

1. A data storing/reproducing system comprising a user terminal (2) for handling user data and a deta storing device (5) capable of transmitting/receiving data to/from said user terminal (2), wherein
said deta storing device (5) sets up user storages (13), each of said user storages (13) being provided for a respective user by allocating a predetermined storage capacity, for recording said user data, receives data to be stored for said user from said user terminal (2) to store same in said user storage, reads data to be reproduced for said user from said user storage, and transmits said data as read to said user terminal (2), and
said user terminal (2) transmits said data to be stored to said deta storing device (5) according to operation by said user, and requests said deta storing device (5) to transmit said data to be reproduced, to receive said data to be reproduced, according to operation by said user.

2. A data storing/reproducing system according to claim 1, wherein each of said user storages (13) is given an inherent identification information for said user, so that said user storage is identified based on said identification information.

3. A data storing/reproducing system according to claim 1, wherein said data stored in each of said user storages (13) include classification data for classifying said data stored therein, data corresponding to said classification data, which is designated by said user, being readable from each of said user storages (13).

4. A data storing/reproducing system according to claim 3, wherein said data to be stored in said user storage is music data.

5. A data storing/reproducing system according to claim 4, wherein said music data to be stored in said user storage include attribute information having a name of an artist and a music title, said attribute information being capable of being designated by said user according to request for said data to be reproduced.

6. A data storing/reproducing system according to claim 1, wherein said deta storing device (5) performs a billing process for said user having said user storage as set up.

7. A data storing/reproducing system according to claim 6, wherein said billing process is managed in terms of a fixed basic cost which is dependent on said storage capacity of said user storage, and a cost which is commensurate with a duration of a data transmitting/receiving operation between said deta storing device (5) and said user terminal (2).

8. A data storing/reproducing system according to any one of claims 1 to 7, wherein said user terminal (2) is mounted on a mobile body, and transmits/receives said data to/from said deta storing device (5) through radio communication.
